(19) Europäisches Patentamt
European Patent Office
Office européen des brevets

(11) **EP 2 285 111 A1**

(12) **EUROPEAN PATENT APPLICATION**

(43) Date of publication:
**16.02.2011 Bulletin 2011/07**

(51) Int Cl.:
**H04N 7/26** (2006.01)

(21) Application number: **09305744.6**

(22) Date of filing: **07.08.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **Canon Kabushiki Kaisha Tokyo (JP)**

(72) Inventors:
• **Frouin, Laurent 35700 Rennes (FR)**
• **Closset, Arnaud 35510 Cesson-Sevigne (FR)**
• **Onno, Patrice 35000 Rennes (FR)**

(74) Representative: **Petit, Maxime Santarelli 14, avenue de la Grande Armée 75017 Paris (FR)**

(54) **Method for sending compressed data representing a digital image and corresponding device**

(57)    A method for sending compressed data representing at least part of a digital image comprises the following steps:
- encoding (206, 220) source data representing said part, according to a first level encoding pass enabling first compressed data to be obtained within a determined time period;
- encoding (221) said source data according to at least one second level encoding pass to obtain second compressed data;
- selecting (218) the second compressed data on at least one condition, comprising that the second compressed data is obtained (205) within the determined time period (215), or otherwise selecting the first compressed data (217);
- sending the selected compressed data.
    A corresponding device is also described.

**Figure 5**

**Description**

The invention relates to a method for sending compressed data representing a digital image and to a corresponding device.

In video transmission over digital networks, various applications (in a broad area ranging from video conferencing to digital home theatre systems) require a sufficient level of responsiveness (*i.e.* low latency).

Conventional solutions have tended to focus on achieving the best video quality while reducing the quantity of transmitted data. Because they do not address transmission timing constraints as a top priority issue, such conventional solutions have to insert de-jittering buffers at various stages of the video processing chain where congestion is expected.

The use of buffers however tends to increase the overall latency, which moreover remains unpredictable, as it depends on network conditions.

Some solutions have focused on reducing the transmission time (by transmitting compressed data representing the video) and on trying to make this transmission time more predictable, for instance despite the variable amount of compressed data to be transmitted depending on the complexity of the images forming the video.

In this context, patent application US 2004/076229 proposes for instance to send within a total allocated time a first data portion (considered as essential) and a second data portion (considered as optional and of which the size is controlled) representing the same image.

In this context, the present invention provides a method for sending compressed data representing at least part of a digital image, wherein the following steps are performed:

- encoding source data representing said part, according to a first level encoding pass enabling first compressed data to be obtained within a determined time period;
- encoding said source data according to at least one second level encoding pass to obtain second compressed data;
- selecting the second compressed data on at least one condition, comprising that the second compressed data is obtained within the determined time period, or otherwise selecting the first compressed data;
- sending the selected compressed data.

The possible use of compressed data obtained following an execution of at least one second level encoding pass allows possible improvement (*e.g.* in terms of quality and/or reduced size of data) relative to the results of the first level encoding pass, the first level encoding pass having been implemented in a fixed amount of time. The second compressed data are however used only if they are produced early enough to be transmitted on time and the potential size and/or quality improvement is thus not detrimental to the responsiveness of transmission.

Said determined time period may for instance be defined by a signal generated by a transmission module, which allows the encoding process timing to be driven by the transmission module.

According to a possible embodiment, the step of encoding according to at least one second level encoding pass may include processing intermediate data obtained during the step of encoding according to the first level encoding pass. Intermediate data produced for the first level encoding pass are thus reused for the second level encoding pass, which reduces calculations necessary for the second level encoding pass and increases the likelihood of having the second level encoding pass performed before the end of the predetermined time period.

A step of encoding said source data according to a further encoding pass may also be optionally provided, in which case this further encoding pass may include processing said intermediate data, with the advantages mentioned above deriving from re-using the results of the first encoding pass calculation.

According to a possible implementation, a step may be provided of determining a parameter of said first level encoding pass to enable said first compressed data to have a size predictably lower than a first predetermined size. The selection of an appropriate parameter, acting on the compressed data size, participates in controlling the size of the overall data stream and thus its timely delivery.

According to the embodiment described hereinafter, the second compressed data may be selected on the further condition that a size of data associated with a group of image parts (referred to as a slice in the following description) and comprising said second compressed data does not exceed a second predetermined size. The second compressed data, representing the part of the image for instance with an improved quality, are thus selected for transmission only if they do not overload the data representing the group of image parts (*i.e.* here the slice) in order not to jeopardize timely transmission of these data.

The second compressed data may for instance be encoded using quantization parameters aiming at a higher quality of representation of said part of the digital image than quantization parameters used for encoding the first compressed data. This possible embodiment focuses on improving the quality of the data transmitted within the determined time period.

According to a possible variation, the second compressed data may be selected on the further condition that said second compressed data comprise a lower amount of data than the first compressed data. This possible embodiment focuses on reducing the amount of data transmitted.

It may also be provided that a second level encoding pass is performed only if the time needed for said performance is predicted not to exceed said determined time period. Thanks to this optional feature, a second level encoding pass is not performed if it is predicted that the second compressed data cannot be obtained before the end of the determined time period. Calculations which results have a strong risk to be discarded are therefore avoided.

According to the embodiment described later on, a step may also be provided of selecting, from a plurality of image parts, an image part to which the step of encoding according to at least one second level encoding pass is to be applied. Hence, among the image parts for which a first level encoding pass has been performed, the most appropriate image part for being encoded according to the second level encoding pass may be chosen. The second level encoding pass may thus focus on image parts based on a given criterion: for instance, the image part selected is the one for which the current compressed data representation gives the lowest quality, as explained hereinafter, in which case the step of selecting the image part may include selecting a part of which corresponding first compressed data forms a low quality representation of said part; as a variation, the focus could be on reducing the data size (*i.e.* for instance selecting the image part being currently represented by the biggest data size).

According to a possible practical implementation, said first compressed data may be designated for transmission at the end of the step of encoding according to the first level encoding pass and the step of selecting the second compressed data may then comprise replacing the designation of the first compressed data with the designation of the second compressed data.

The invention also provides in a corresponding manner a device for sending compressed data representing at least part of a digital image, comprising first encoding means for encoding source data representing said part, according to a first level encoding pass enabling first compressed data to be obtained within a determined time period, second encoding means for encoding said source data according to at least one second level encoding pass to obtain second compressed data, means for selecting the second compressed data on at least one condition, comprising that the second compressed data is obtained within the determined time period, or otherwise the first compressed data, and means for sending the selected compressed data.

Optional features mentioned above with respect to the sending method may also apply to this sending device.

The invention further provides a computer program comprising instructions for carrying out each step of the method described above when the program is loaded and executed by a programmable apparatus.

The invention also provides an information storage means, readable by a computer or a microprocessor and storing computer program instructions for carrying out each step of the method described above when the program is loaded and executed by a programmable apparatus.

Other features and advantages of the invention will appear in light of the following description made with reference to the appended drawings, in which:

- Figure 1 shows an example of a video frame encoder designed in accordance with the teachings of the invention;
- Figure 2 illustrates a system including the video encoder of Figure 1;
- Figure 3 shows a possible example of memory organization for tile definition storage;
- Figure 4 shows a possible example of memory organization for slice definition storage;
- Figure 5 depicts the general steps of operation of the encoder of Figure 1;
- Figure 6 depicts an example of algorithm for redistributing slice allocation following an application of a second processing pass;
- Figure 7 shows an example of algorithm for determining the inclusion of tiles in slices;
- Figure 8 depicts an example of algorithm used to decide slice termination resulting in slices of variable size;
- Figure 9 illustrates a process for selecting tiles to be encoded by execution of a second processing pass;
- Figure 10 illustrates a possible method for packetization of compressed data for transmission.
- Figure 11 illustrates a re-organization of the slice buffers when a slice is adjusted after execution of a second level encoding pass.

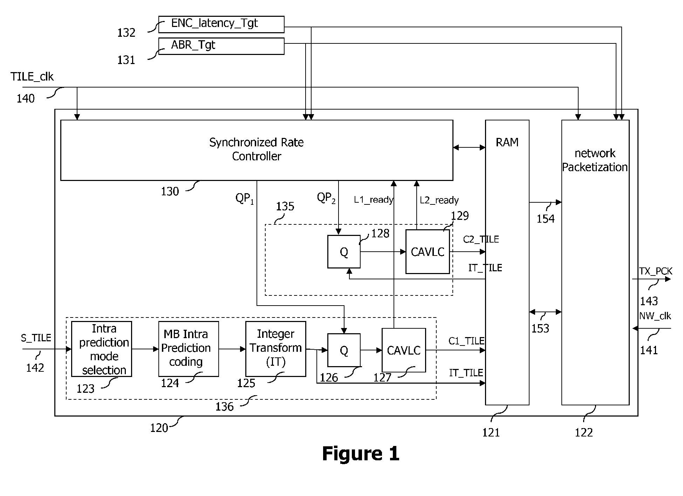

**Figure 1** illustrates the main elements of an image encoder 120 adapted to implement an encoding method according to the invention.

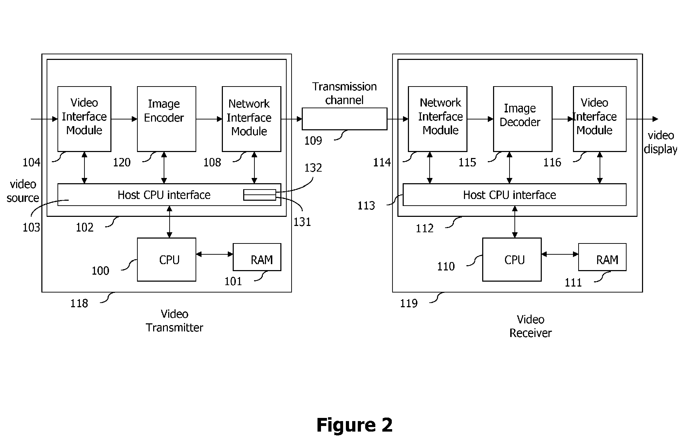

Encoder 120 receives from a video interface module (shown in Figure 2 under reference 104) a tile clock signal TILE_clk as well as source video tile information S_TILE.

Source video tile information S_TILE describes all consecutive pixels for a predefined number of consecutive lines of the image forming a tile. Each pixel is encoded for instance using the YUV colour space coding format. In the present example, a tile is made of 16 video lines. For instance in the case of a 1080p video source, a video line is composed of 1920 pixels of 24 bits each using the YUV encoding format. The corresponding source video tile information is 16*24*1920 bits for a 16-line tile.

The tile clock signal TILE_clk provides accurate timing identifying the first pixel of each tile within the overall video stream timeline. For instance in case of a 1080p video source, each video frame contains 1080 lines and 60 video frames are provided per second. In this case, the corresponding tile clock period is thus (1/60)*(1/1080)*16 seconds (246.91 microseconds) for a 16-line tile. The video stream timeline is usually driven by the video source.

The encoder 120 also receives a network clock signal NW_cik from a network interface module (shown by reference 106 in Figure 2 described later). As explained in further detail below, the encoder 120 is designed to transmit to the network interface module a data packet TX_PCK having a predetermined size at a regular cadence determined by the network clock signal NW_clk (*i.e.* generally in accordance with the network clock signal NW_clk period, *e.g.* every 125 microseconds).

These fixed size data packets TX_PCK can then be transmitted by the network interface module 106, possibly with additional data buffering when variations on the network are to be compensated for. Transmission over a synchronous network without further buffering would however be optimally beneficial to the encoding method provided by the encoder of Figure 1.

A description will now be given of the various blocks forming the encoder 120 shown in Figure 1.

The encoder 120 comprises a first level encoder 136 enabling the source information S_TILE to be encoded thanks to a first level encoding pass, the first level encoding pass corresponding to a first encoding path.

In the present example, the first level encoder 136 encodes the source information data according to the H264 standard using H264 intra-coding only (*i.e.* without motion prediction). Other types of coding could of course be used instead.

As shown in Figure 1, source data representing a tile S_TILE are first processed through a prediction mode selection module 123 which analyses source data S_TILE for selection of the intra prediction mode to be used.

Source data S_TILE are then processed by a prediction coding module 124 where the macro blocks (MB) forming the tile (*i.e.* 16*16 pixel blocks within the tile) are processed according to the prediction mode determined in the prediction mode selection module 123.

For each macro block, the residual data obtained by comparing the predicted macro block to the original macro block (*i.e.* the macro block in the source data S_TILE) are then processed through an integer transform module 125, thus generating an integer transform intermediate result. The set of integer transform intermediate results obtained for the various macro blocks of the tile being processed, referenced as IT_TILE, is stored temporarily in an internal memory 121 of the encoder 120 as shown in Figure 1.

A quantization module 126 then applies a quantization step to the coefficients of the set IT_TILE with quantization parameters $QP_1$ defined by the synchronized rate control module 130 as further explained below.

Quantized coefficients, possibly reordered, are then processed by a CAVLC module 127 (CAVLC standing for *"Context Adaptive Variable Length Coding"*), thus performing entropy encoding and obtaining compressed data C1_TILE representing the tile. The CAVLC module 127 stores the compressed data C1_TILE representing the tile in memory 121 and simultaneously generates a signal referenced L1_ready for the synchronized rate control module 130, as shown in Figure 1.

The encoder 120 further comprises a second level encoder 135 enabling the source data S_TILE to be coded using a second level encoding pass which corresponds to an encoding according to a second encoding path.

As further explained below, operation of second level encoder 135 is triggered by the synchronized rate control module 130, based on criteria detailed below, among which is the possibility to perform at least one second level encoding before the expected transmission time for compressed data representing the source video tile S_TILE concerned.

In the preferred embodiment as further described hereafter, one second level encoding pass is possibly performed for a given tile. In an alternative embodiment, more than one pass of second level encoding is performed for a given tile, as a function of the remaining time before transmission of the tile.

In the present embodiment, the second level encoder 135 comprises a quantization module 128 for quantizing coefficients of the set IT_TILE obtained by the first level encoder 136 and then stored in memory 121 as previously explained. The quantization parameters $QP_2$ used in the quantization module 128 are however different from the quantization parameters $QP_1$ used in the quantization module 126, with the general aim of improving the quality of the representation of the source information S_TILE compared to the quality obtained by representing the source information S_TILE by the compressed data C1_TILE obtained by the first level encoder 136.

The quantization parameters $QP_2$ used in the quantization module 128 are determined by the synchronized rate control module 130 as explained below.

The quantized coefficients output from the quantization module 128 are then reordered and processed through the CAVLC module 129 performing entropy encoding (in a similar manner to that by the CAVLC module 128).

The CAVLC module 129 stores the resulting compressed data C2_TILE in the memory 121 and simultaneously generates a signal referenced L2_ready transmitted to the synchronized rate control module 130.

As explained above, the second level encoder 135 of the described embodiment uses intermediate results computed by the first level encoder 136. According to alternative embodiments, the second level encoder 135 could compute compressed data C2_TILE directly from the source video information S_TILE.

It can also be pointed out that, although the various steps of encoding are shown as being made by various modules, a single physical module could perform several of these steps. In particular, the quantization corresponding to the first level encoding pass (referring to the module 126 in Figure 1) and the quantization corresponding to the second level encoding pass (referring to the module 128 in Figure 1) could be implemented by the same quantization module. Similarly, the entropy encoding of the first level encoding pass and of the second level encoding pass could be implemented by a single CAVLC module.

As previously noted, the encoder 120 includes an internal memory (generally a RAM) 121 comprising:

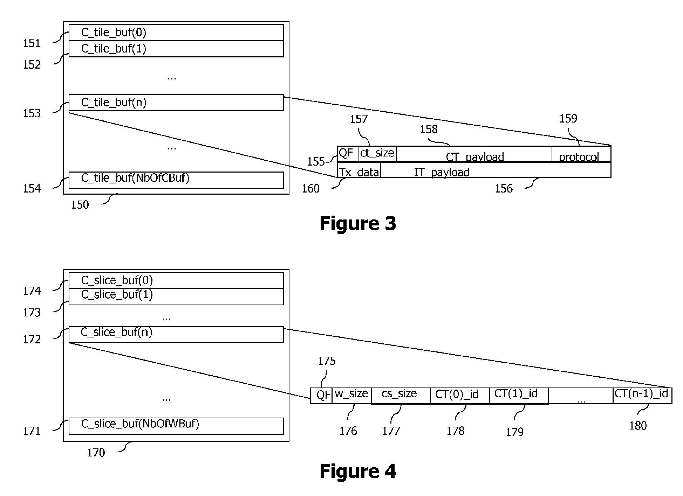

- a buffering bank, containing the compressed tile data obtained by the CAVLC modules 127, 129, as well as the intermediate results obtained by the integer transform module 125, and internally organized as a circular buffer for example; typically, the buffering bank contains the payload data CT_payload 158 and IT_payload 156 referenced in the buffers C_TILE 151 to 154 as further described below with reference to Figure 3; and
- a configuration bank, containing all necessary tile and slice parameters (such as the banks of buffers C_TILE 150 and C_SLICE 170 as shown in Figures 3 and 4) obtained by the synchronous rate control module 130 during slice formatting, and arranged as configuration registers for example. Those parameters are further used by the network packetization module 122 to perform padding insertion as explained later.

The encoder 120 comprises as already mentioned the synchronized rate control module 130.

The synchronized rate control module 130 receives the tile clock signal TILE_clk from the video interface module 104 and the signals L1_ready, L2_ready respectively from the first level encoder 136 and the second level encoder 135.

The synchronized rate control module determines, as already noted and further detailed below, the quantization parameters $QP_1$, $QP_2$ respectively used in the quantization modules 126, 128 of the first level encoder 136 and the second level encoder 135.

As further described below, the rate control module 130 also checks whether replacement of the compressed data C1_TILE with the compressed data C2_TILE would not overload the considered slice. As a possible variation, the rate control module 130 could check whether there is any compression improvement from the compressed data C1_TILE to the compressed data C2_TILE.

As also described in detail below, the synchronized rate control module 130 performs the task of managing the aggregation of compressed tiles. For this purpose, the tile structure parameters (*e.g.* payload size and a quality parameter or factor) and the updated slice structure parameters (size, aggregated payload size, tile addresses in the buffering bank and the mean quality factor of associated tiles) are stored in the configuration bank, once the tile compression is ended, *i.e.* upon occurrence of event L1_ready.

The encoder 120 lastly comprises a network packetization module adapted to prepare fixed-size packets TX_PCK based on compressed data stored in the memory 121 and to deliver them in a timely manner to the network interface module 106.

The network packetization module 122 thus has the task of delivering network packets, consisting in formatting Network Data Units (NDUs) with previously buffered compressed data payload, and appending blank data (*i.e.* padding) at the end of each slice, so as to attain the corresponding typical payload size, depending on:

- the actual payload size of the considered slice,
- the typical predefined payload size of the considered slice, based on the number of tiles in the slice and the number of NDUs allocated for one tile.

The compressed data are retrieved from the memory 121 through the data interface 153 (from the buffering bank), while all necessary parameters necessary to delimit the tiles, such as the size parameters, are retrieved from the parameter interface 154 (from the configuration bank).

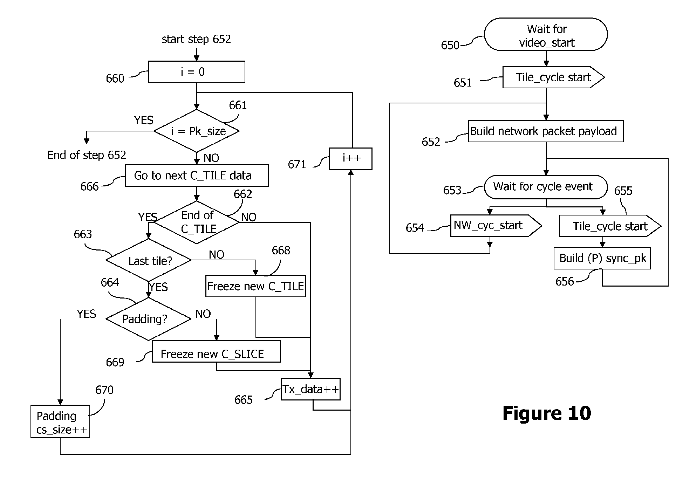

Detailed operation of the network packetization module 122 is described below with reference to Figure 10.

The rate control module 130 and the network packetization module 122 work according to a latency target ENC_latency_Tgt and an average bit rate target ABR_Tgt respectively stored in the registers 132, 131, for instance in a host CPU interface 103 described below with reference to Figure 2.

**Figure 2** describes a system using an image encoding apparatus 102 in which the image encoder 120 is embedded. On the emitter side, the system comprises a CPU 100 including a memory 101 and the image encoding apparatus 102 including the encoder 120. The image encoding apparatus 102 also includes a video interface module 104 receiving a digital video stream, for instance represented using the YUV format. In a possible embodiment, the video interface module 104 could format the video signals received from a standard video interface (such as HDMI) to generate the source video tile (S_TILE) signal 142 as well as the tile clock (TILE_clk) signal 140 representing the start of tile timing, and forward these signals to the image encoder 120 as already explained.

The image encoder 120 then generates a network packet transmission signal (TX_PCK) 143 for the network interface module 108 according to the network clock (NW_clk) signal 141, generated by the network interface module 108.

The network packet TX_PCK is then transmitted to a video receiver 119 via a transmission channel. On the receiver side, a network interface module 114 stores the received packets, before transferring them to a standard image decoder 115 according to synchronization information generated during network packetization on the emitter side and as described with reference to Figures 10. Decompressed image data are then processed by a video interface module 116 having the task of transmitting video data, *e.g.* through an HDMI transceiver, to a display.

It may be noted that, as the transmitted compressed data are either encoded after applying the first level encoding pass only or after applying one (or more) second level encoding pass(es) (both giving rise to standard encoding), the decoder on the receiver side can be a standard decoder as well.

The overall system is controlled by a transmitter CPU 100 of the video transmitter 118 and a receiver CPU 110 of the video receiver 119, each having their own memory (respectively 101 and 111) for control software execution, for instance to proceed with system initialization and parameters configuration.

The CPU 100 and 110 are in charge of initializing system settings described in the table shown in the Appendix; in particular, the parameters corresponding to lines 1, 2, 6, 7, 9, 10 and 14 of the table are stored in the host CPU interface 103 on the emitter side and 113 on the receiver side. These registers are accessible to all other modules to define if necessary other parameter values, to be calculated according to the formulae described in the right hand column. In particular the system settings N_PARAM_1 and L_PARAM_1, as shown at lines 9 and 14 of the table, are stored, respectively, in the registers 131 and 132, as already noted and shown in Figure 1.

**Figure 3** describes the memory organization of the bank of buffers C_TILE 150, storing information in a plurality of buffers C_TILE 151 to 154, each relating to a given tile and being identified by a unique identifier C_TILE.

A buffer C_TILE (*e.g.* 153) has the following memory structure:

- a quality factor (or quality parameter) field 155 representing the overall quality at tile level; this is for instance a measure of the difference, after applying some quantization at macro block level, compared to the source tile. Usually this information is first calculated at macro block level, as quantization may be expected to differ for each macro block. Next a global value is obtained at tile level representing the average difference, hereafter called Mean to Average Difference (MAD). MAD is for instance calculated only for the 8-bit luminance (Y) of the YUV colour space:

$$MAD = \frac{1}{m.n} \sum_{i=0}^{m-1} \sum_{j=0}^{n-1} \left| Ys_{i,j} - Yq_{i,j} \right|$$

wherein n is the number of pixels per line (for instance 1920), m the number of lines per tile (for instance 16), $Ys_{i,j}$ is the luminance value of the original pixel at the $(j+1)^{th}$ column and $(i+1)^{th}$ line and $Yq_{i,j}$ is the luminance value of the decoded pixel (at the same position) after application of quantization. This quality factor may also include additional information such as a quantization map, representing the quantization value for each macro block of the tile. Any other relevant calculation method could however alternatively be used here, such as Mean Squared Error (MSE):

$$MSE = \frac{1}{m.n} \sum_{i=0}^{m-1} \sum_{j=0}^{n-1} \left| Ys_{i,j} - Yq_{i,j} \right|^2$$

The memory structure of a buffer C_TILE (*e.g.* 153) further comprises:

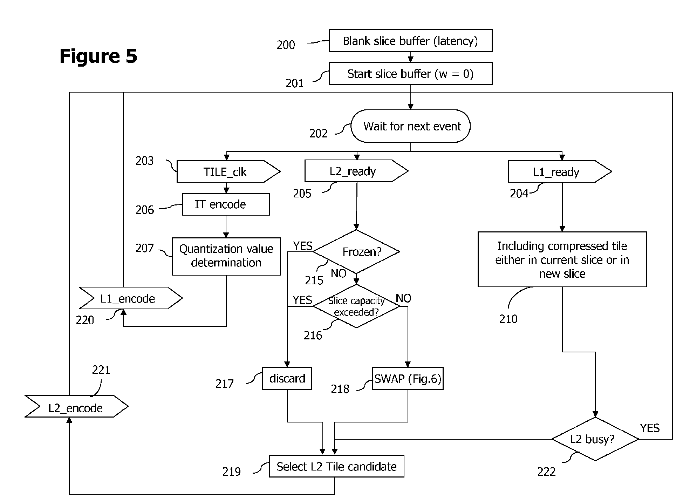

- a size field (ct_size) 157, representing the size of the tile, expressed in number of bytes, as the sum of the size of each encoded macro block after entropy encoding;
- a payload field 158 describing the value of each encoded macro block for the tile (*i.e.* comprising the compressed data representing the tile *per se*);
- a protocol field 159 used to add transport protocol information, comprising among others: size of useful data, redundancy for Forward Error Correction, and/or any other necessary information allowing the receiver to handle transmission errors;
- a Tx_data indication field 160, to be modified by the network packetization module 122 (see detailed description with reference to Figure 10), when transmission of the tile over the network has started, meaning that the compressed data can no longer be modified. The value of the field may then be analyzed by the synchronized rate control module 130 either (a) when performing tile selection aiming at a second level encoding pass (step 219 detailed below) or (b) when checking the results of a second level encoding pass, *i.e.* before withdrawing the compressed data obtained by a previous encoding pass (either a first level encoding pass or a second level encoding pass) in favour of the compressed data obtained by this second level encoding pass (at step 215 explained below with reference to Figure 5);
- a field 156 used to store the intermediate results IT_TILE obtained by the integer transform module 125 for the tile.

**Figure 4** describes the memory organization of the bank of buffers C_SLICE, to be managed, for example, as a circular buffer 170. The size of the circular buffer (number of buffers C_SLICE) is defined according to the maximum latency to be supported by the system (from the interface with the video source up to the interface with the video display), taking into account the number of tiles per slice.

This circular buffer 170 is made of several buffers C_SLICE 171 to 174, all having the same memory structure and each describing the composition of the considered slice in terms of tiles. Each buffer C_SLICE comprises:

- a quality factor field 175 representing the overall quality at slice level, for instance determined from an average value representing the quality at tile level (see field 155 above) calculated taking into account each tile within the slice;
- a size field (w_size) 176, representing the size of the slice, expressed in number of tiles (*i.e.* the currently expected number of tiles within the slice);
- a size field (cs_size) 177, representing the size of the slice, expressed in number of bytes as the sum of the sizes of the compressed tiles forming the slice;
- a set of fields 178 to 180, representing indexes of the C_TILE buffers containing the tiles forming the slice. The index pointing to the last tile of the slice is followed by a null tile index.

**Figure 5** shows the process implemented by the synchronized rate control module 130.

Before turning to the running phase of the process, it may be pointed out that the rate control module 130 is in charge of encoder initialisation. On system reset, it creates a blank slice buffer (such as the ones described with reference to Figure 4) having w_size field 176 set to a predefined MAX_W_SIZE value (step 200) and all compressed tile buffer addresses set to null, representing an empty compressed slice artificially including MAX_W_SIZE tiles.

MAX_W_SIZE value (see line 15 of the table in Appendix), describing the maximum number of tiles per slice, is defined from a latency target value (ENC_latency_Tgt) and an average bit rate target value (ABR_Tgt), respectively stored in the registers 132 and 131 as already noted.

The latency target value (register 132) must be greater than the duration of one tile while including some safety margin. Furthermore this latency target value must always be larger than the maximum time required to completely perform the first level encoding pass for a tile having the worst case complexity.

Defining a blank slice buffer artificially including MAX_W_SIZE tiles drives the network packetization module 122 to wait for a period corresponding to the encoder latency (as from system reset) before starting to transmit compressed data actually provided by the encoder.

The encoder peak bit rate is defined according to the maximum size PBR_CT_SIZE of a compressed tile. This is a configuration parameter that dimensions hardware resources, especially defining the size of the compressed tile payload field 158.

Next, in order to launch the running phase at step 201, a new slice buffer is allocated, called current slice buffer, where the results of compression are to be stored. By default, the value of the size field 176 is set to MAX_W_SIZE. At this point, none of the compressed tile buffer has been allocated, so all fields 178 to 180 are set to null and the number of actually encoded tiles for this slice equals 0. Hereafter 'w' represents the number of actually encoded tiles for the current slice. At this point w equals 0.

In addition MAX_W_FEED is defined as the current slice capacity in bytes, thus according to the following formula:

$$\text{MAX\_W\_FEED} = \text{w\_size} * \text{ABR\_CT\_SIZE},$$

wherein w_size is the value of the field 176 of the current slice as expressed in the corresponding buffer C_SLICE, and wherein ABR_CT_SIZE corresponds to the average bit rate value at tile level (as shown at line 13 of the table in Appendix), whereas the value ABR_Tgt, from which ABR_CT_SIZE is derived, corresponds to the average bit rate value expressed in bits per second (INT being the integer function which keeps only the integer part of a possibly non-integer number).

At next step 202, the rate control module 130 awaits a synchronization event, to be either:

- a tile cycle start event (step 203), based on the signal TILE_cik generated by the video interface module 104 as previously explained;
- a first level encoding termination event 204, based on the signal L1_ready generated by the CAVLC module 127 after completion of the encoding of a compressed tile using the first level encoding pass;
- a second level encoding termination event 205, generated by the CAVLC module 129 after completion of the encoding of a compressed tile by the second level encoding pass; the event provides a reference to the slice as well as to the position of the tile within the slice. The slice, as well as the tile position within the slice, has to be referenced, to be recorded later (step 218) in the payload field of the appropriate buffer C_TILE, within the appropriate buffer C_SLICE. Contrary to the first level encoding pass, the second level encoding pass does not process the tiles according to their relative time ordering, but according to a decision of the rate control module 130 (step 219) as described below.

Starting with the process following the tile cycle start event, at step 206, the integer transform of every incoming tile is calculated by the module 125 immediately after being triggered by the TILE_clk signal.

Next, at step 207, the quantization value to be used is determined according to a process described below before starting, at step 220, the first level encoding by the modules 126 and 127.

On receiving the L1_ready signal indicative of a first level encoding termination (step 204), the module 130 checks the result obtained (*i.e.* data C1_TILE stored in the memory 121) in order to determine whether this compressed data C1_TILE should be included in the current slice or in a new (empty) slice (step 210).

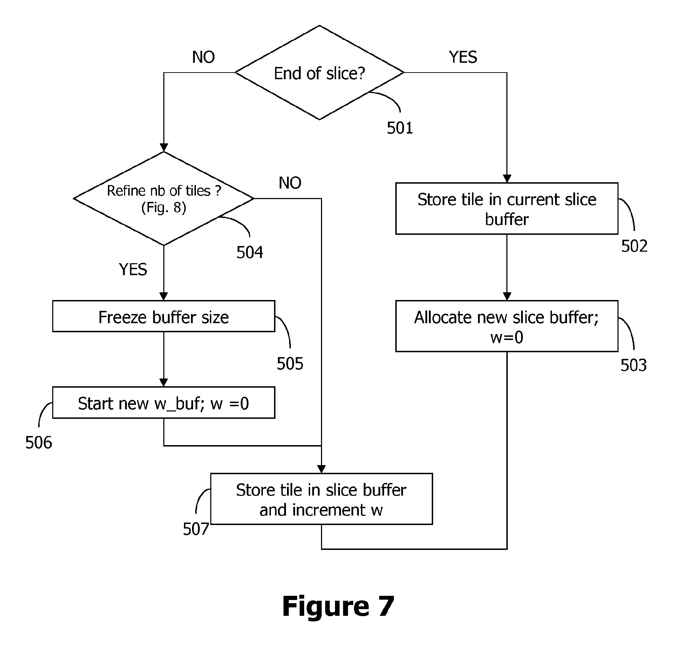

A possible embodiment to implement this step (210) is described below with reference to **Figure 7.**

After the new compressed tile is included in a slice, it is checked in step 222 whether a second level encoding is currently in progress. If yes, the algorithm returns to step 202, waiting for a next event. If no, the process of starting a second level encoding of a tile (steps 219 and 221) is implemented as explained below.

After notification of a second level encoding termination (step 205), the rate control module 130 checks the obtained result (C2_TILE stored in the memory 121).

Before deciding to swap with the new value at step 218 (*i.e.* to update the buffer C_TILE of the considered tile with the buffer identified by C2_TILE and thus to designate this last buffer as the compressed data currently planned for transmission), it is checked:

- whether transmission of the tile to be swapped has started at step 215 (by checking Tx_data field 160 for the considered compressed tile);
- then, if transmission has not started yet, whether an estimated new value, taking into account the size of C2_TILE, for the cs_size field of the buffer C_SLICE being currently filled in, at step 216, exceeds the value MAX_W_FEED of this buffer C_SLICE.

If any of the two conditions above is met, the result C2_TILE of the second level encoding pass is discarded at step 217.

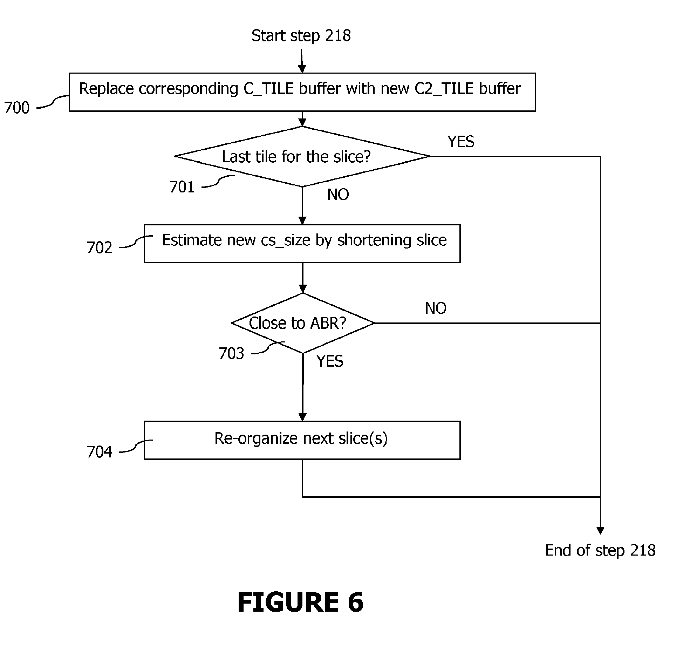

Otherwise, step 218 is performed. The corresponding processing is described more in detail in reference to **Figure 6:**

In step 700, the value of cs_size (field 177) of the buffer C-SLICE under consideration is adjusted according to the ct_size (field 157) value of buffer identified by C2_TILE, and the buffer identified by C2_TILE replaces the buffer C_TILE used so far for the compressed tile (by swapping the buffer addresses in the corresponding buffer C_SLICE). The buffer C_TILE previously in use is then available for processing any future tile.

It is then verified thanks to the steps described just below if the replacement of the buffer C_TILE with the (possibly larger) buffer C2_TILE should have any consequence on the inclusion of the tiles in the slices.

First, in step 701, a test is done to check if the size of the slice currently filled corresponds to MAX_W_SIZE, and in this case, if the concerned tile is at last index.

If it is the case, no further processing is performed (*i.e.* there is no consequence on slice definition) and step 218 is terminated. Conversely, a tentative of re-organizing the already filled-up slices is performed. A tile in an already filled-up slice can be re-allocated to a different slice (generally speaking, when the slice becomes too large because of the replacement of the buffer C_TILE with the buffer C2_TILE), unless this tile is considered as frozen.

In step 702, a new cs_size field is first computed assuming the tile identified by C2_TILE is closing the slice (i.e. would become the last tile of the slice).

Then, in step 703, a test is done to check whether the computed new cs_size is greater than a threshold value, for instance being defined as 90% of the value ABR_CT_SIZE * w_size. As a variant, this threshold value is adjustable and can be refined to improve overall performance of the encoding.

In the negative, no modification is performed and step 218 is terminated.

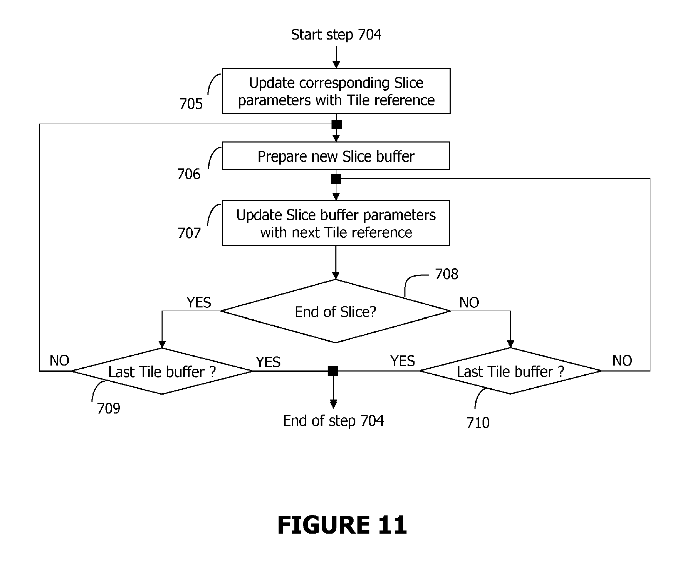

In the affirmative, step 704 is executed. This step is detailed below, with reference to **Figure 11 :**

In step 705, the slice under process is closed with the tile of C2_TILE, and the corresponding slice parameters 175 to 180 (referring to Figure 4) are updated with C2_TILE information (index, size).

Then, in step 706, a new slice buffer is prepared to initiate slice re-organization of already filled subsequent slices.

In step 707, the slice buffer parameters are updated with the information of the next tile (index, size).

Then, in step 708, a test is performed to check if at least one criterion for closing current slice is met or not. This test is similar to test 504 of Figure 7.

If test 708 is positive, a subsequent test 709 is performed to check if the concerned tile is the last filled tile of the buffer

If test 709 is positive, step 704 is terminated.

If test 709 is negative, a loopback to step 706 is performed to continue re-organization with the next slice.

If test 708 is negative, a subsequent test 710 is done to check if the concerned tile is the last filled tile of the buffer

If test 710 is positive, step 704 is terminated.

If test 710 is negative, a loopback to step 707 is performed to continue the re-organization of the current slice.

Once the results of the second level encoding for the current tile have been processed as just mentioned, a second level encoding of another tile may be performed as now described.

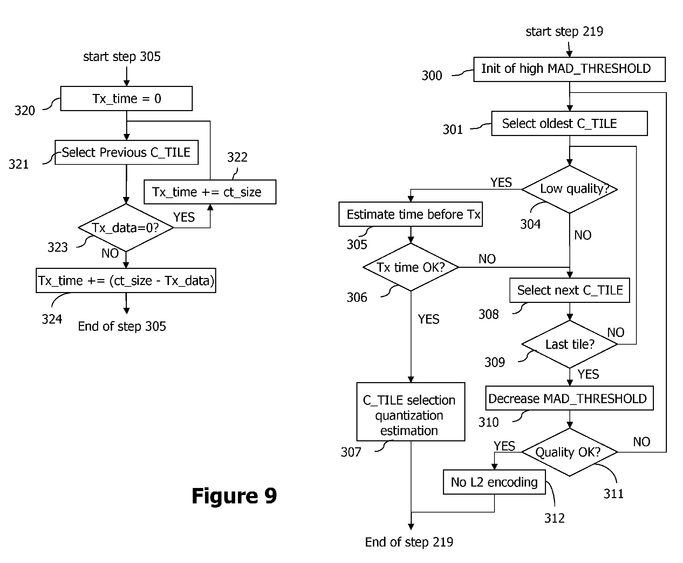

First, at step 219, selection of an appropriate tile candidate to apply a another iteration of the second level encoding and adjustment of a corresponding quantization value, to improve overall quality, are performed as described below with reference to **Figure 9.**

Next, at step 221, a second level encoding is started (only if a tile has been selected during step 219, together with a corresponding quantization value).

Having now described the general process implemented by the control module 130 with reference to Figure 5, several aspects will now be described in more detail as already indicated.

According to a possible embodiment, step 207 of determining a quantization value can be implemented as follows:

- when the current tile is the first tile of a slice ($w = 0$), the quantization value is set to:

> (1) an average value QZ_MEAN cumulated for instance over the last 1000 video frames (roughly corresponding to the last 10 seconds of video), and ensuring that the compressed tile size will not exceed ABR_CT_size (parameter shown at line 13 of the table in Appendix), except in the following two cases; QZ_MEAN can be also a typical value obtained from encoding experience performed on reference video frames, representative of the targeted application.
> (2) a more accurate than average quantization value (*i.e.* a value smaller than QZ_MEAN), when the last tile of the previous slice was detected as having significantly low complexity (*i.e.* when the size of the compressed tile is smaller than a predefined threshold value, for instance defined as 75% of ABR_CT_SIZE);
> (3) a less accurate than average quantization value (greater than QZ_MEAN), when the last tile of the previous slice was detected as having significantly high complexity (*i.e.* when the size of the compressed tile is greater than a predefined threshold value, for instance defined as 90% of ABR_CT_SIZE);

- otherwise (if the current tile is not the first tile of the slice, $w > 0$), the predefined quantization value is set to:

> (1) the average value QZ_MEAN, when for this new slice, current size (value of cs_size field 176) is close to nominal value (*e.g.* greater than a predefined threshold value, for instance defined as 80% of w* ABR_CT_SIZE size, but less than w* ABR_CT_SIZE) to ensure the compressed tile size does not exceed ABR_CT_size (parameter at line 13 of the table in Appendix);
> (2) a more accurate than average quantization value (smaller than QZ_MEAN), when for this new slice, the current slice size is significantly low (*e.g.* smaller than a predefined threshold value, for instance defined as 80% of w* ABR_CT_SIZE size);
> (3) a less accurate than average quantization value (greater than QZ_MEAN), when for this new slice, the current slice size is significantly high (greater than w* ABR_CT_SIZE).

In addition to the criteria above, the quantization value can be adjusted at macro block level according to an estimation step (conventional per se) that aims at estimating the resulting bit rate after entropy encoding.

Choosing the quantization value before first level encoding as just explained allows anticipation of bit rate optimization at slice level based on past experience. Furthermore the predefined threshold values introduced above can be adjusted (fine tuning) in order to improve the video quality.

As possible variations, different quantization parameter refinement strategies or algorithms can be implemented, based on profiling methods, or relying for example on quantization parameter filtering, or on prediction algorithms based on monitoring during processing over a variable number of preceding tiles, slices or frames.

A description will now be given with reference to Figure 7 of a possible embodiment for step 210 of determining the slice inclusion for a tile that is just compressed using the first level encoding.

First it is checked at step 501 whether the tile just compressed is the last one for the current slice, actually when having w = (w_size - 1).

If it is,

- in step 502, the compressed tile result C1_TILE is first associated with the current slice buffer, and the compressed tile buffer identifier (the buffer C1_TILE) is recorded into the current slice buffer C_SLICE. Furthermore the average quality factor corresponding to the current slice buffer is updated and stored in the quality factor field 175;
- in step 503, a new slice buffer is allocated, to become the new current slice buffer, where the results of the following first level encoding are stored. By default, the value of w_size field 176 is set to MAX_W_SIZE. The current number of compressed (or encoded) tiles is set to 0 (w= 0), following the same process as performed at step 201.

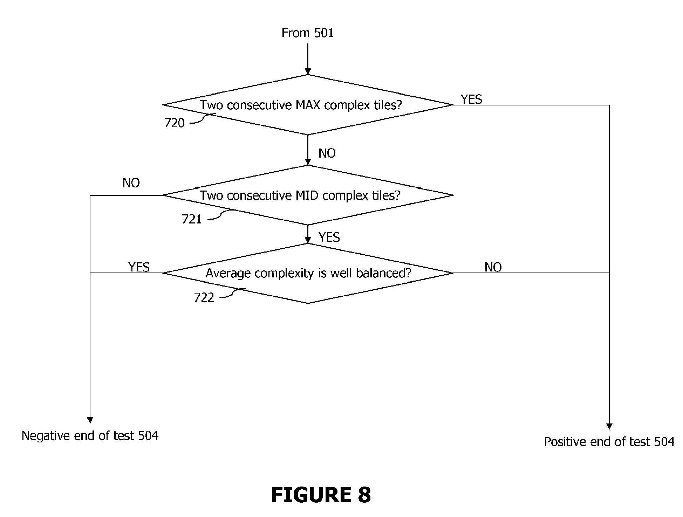

Otherwise, at step 504, it is checked whether it is pertinent to adjust (*i.e.* to refine) the currently expected number w_size of tiles in the slice as a function of the progress of the encoding process. This check is performed according to decision criteria that are detailed relatively to Figure 8.

Referring to Figure 8, at step 720, it is checked whether the last tile included in the slice and the last compressed tile are both tiles of maximum complexity (labelled as "MAX complex"). In case of a positive check at step 720, the two consecutive complex tiles have to be placed in two separate slices, and the termination of the current slice is then anticipated.

Tile complexity depends on the compressed tile quality factor versus the compressed tile size. The compressed tile quality factor value is stored in the quality factor field 155. The compressed tile size is stored in ct_size field 157. A tile is considered to be complex when the quality factor value is smaller than a quality threshold value called MAD_MEAN, while ct_size is greater than ABR_CT_SIZE. Similarly, a compressed tile is considered to be complex when its size is exceeding ABR_CT_SIZE, for a given quantization value equal or greater than QZ_MEAN.

For instance, a tile of maximum complexity ("MAX complex") is detected when:

**(1)** for a quantization value twice greater than QZ_MEAN, the size of the compressed tile is greater than a predefined threshold value, for instance defined as 90% of ABR_CT_SIZE);

**(2)** for a quantization value greater than QZ_MEAN, the size of the compressed tile is greater than a predefined threshold value, for instance defined as 110% of ABR_CT_SIZE);

Minimum complexity ("MID complex") is detected for a non-"MAX complex" tile when:

**(3)** for a quantization value greater or equal to QZ_MEAN, the size of the compressed tile is greater than a predefined threshold value, for instance defined as 90% of ABR_CT_SIZE;

Obviously such threshold values are illustrative and could be adjusted depending on overall encoding performances.

At step 721, it is checked whether the last tile included in the slice and the last compressed tile are both "MID complex" tiles. In case of a positive check at step 721, the overall quality of the slice is checked at step 722.

At step 722, for the current slice, overall slice quality factor is computed as the mean value of slice tiles quality factor (value of field 155 of C_TILE buffer memory structure), including the last compressed tile. If the obtained quality factor is smaller than the predefined quality threshold MAD_MEAN, the two consecutive "MID complex" tiles are spread into different slices and the result of test 504 is positive.

When the check at step 721 is negative or the check at step 722 is positive, test 504 is negative, meaning that either there is room to improve slice quality or the slice quality is already fine.

Variants can be introduced here to add criteria to decide anticipated slice termination, for instance checking the high quality (slightly above MAD_MEAN) of the current slice. Adjusting MAD_MEAN value from experimentation would allow improving encoder performances.

Now referring back to **Figure 7,** when both the current tile and the previous tile are considered as complex tiles, the test 504 is positive and the current tile is included in a new slice as described below (starting at step 505). Otherwise it is negative and step 507 is executed.

It may be noted that adjusting slice size would help here to better spread compressed tile complexity between different slices, to allow better usage of available bandwidth.

Step 505 thus anticipates the end of the current slice, for the corresponding current slice buffer, by adjusting w_size field 176 to the current value of 'w'.

In step 506, a new slice buffer is allocated, to become the new current slice buffer, where the results of the first level encoding just completed are stored. The current number of compressed tiles is then null (w=0). By default, the value of w_size field 176 (for the new slice) is set to MAX_W_SIZE.

At step 507, the compressed tile result C1_TILE is associated with the corresponding current slice buffer, by recording in this slice buffer the identifier of the tile buffer C1_TILE. Then the average quality factor corresponding to the current slice buffer is updated and stored in the quality factor field 175. Finally the number of compressed tiles within the current slice buffer is incremented

Different slice formatting strategies or algorithms can be implemented, based on profiling methods, or relying for example on mean quality parameter filtering, or on prediction algorithms based on monitoring during processing over a variable number of preceding tiles, slices or frames.

A possible embodiment for step 219 of selecting a tile to be encoded by application of a second level encoding pass is now described with reference to **Figure 9.**

In this embodiment, it is assumed that aggressive compression would be performed at the first stage (using first level encoding) and that the goal of the second level encoding would be to try to improve the quality, without however exceeding the maximum slice size MAX_W_FEED, previously defined (w_size * ABR_CT_SIZE).

The right-hand side of Figure 9 describes the search algorithm implemented throughout the (compressed tile) bank of buffers C_TILE.

The search algorithm first initializes the quality factor threshold value (step 300) with a predefined value MAD_THRESHOLD (corresponding to a tile of rather low quality).

The search algorithm then looks for the oldest compressed tile, which is the tile to be transmitted just after the one currently under transmission (step 301). This is performed by analyzing Tx_data indication field 160 for the oldest compressed slice C-SLICE, starting from the first compressed tile C_TILE.

For the selected (oldest) buffer C_TILE, the quality is compared to MAD_THRESHOLD (step 304). If this compressed tile is of lower quality (*i.e.* when the value of the field QF 155 is greater than or equal to MAD_THRESHOLD), step 305 is executed as described later; otherwise at step 308, the next tile (following the one under consideration) is selected, if any remains.

Selecting the next tile (step 308) also includes the operation of moving to a next slice when the end of a slice has been reached.

If the most recent tile has been checked, test 309 is positive and the MAD_THRESHOLD value is decreased in step 310, until a minimum (so-called acceptable) value of MAX_THRESHOLD is reached. In case this threshold value is actually reached, the result at step 311 is positive and the in-progress second level encoding is not performed (step 312). Otherwise the new MAD_THRESHOLD value is applied, and the processing goes back to step 301 in order to search again (from the oldest tile) for a compressed tile to be encoded (this time with a lower threshold, *i.e.* a higher quality goal).

The left-hand side of Figure 9 describes a possible implementation of step 305, as one example to estimate the remaining time before transmission. It is clear that the remaining time before transmission corresponds to the remaining time to perform extra encoding iteration, using the second level encoding, i.e. to perform another second level encoding pass.

At step 320 a Tx_time counter (representative of a quantity of data) is set to 0.

Then, after stepping back to the previous compressed tile (step 321), the Tx_time counter is incremented:

-   by the ct_size value field 157 if the transmission has not been started for this tile (based on the value of Tx_data field 160, *i.e.* test 323 is positive),
-   by the ct_size value of the field 157, minus the number of transmitted data (Tx_data value of field 160) if transmission has already started for this tile (based on the Tx_data value of the field 160, *i.e.* test 323 is negative).

After execution of step 322, at step 321, the previous compressed tile is stepped back to, towards the oldest one.

It may be noted that selecting the previous tile (step 322) also includes moving to the previous slice when the beginning of a slice has been reached.

After executing step 324, step 305 terminates, and test 306 is implemented, where the estimated time is compared to a predefined value corresponding *e.g.* to a maximum foreseeable time needed for performing a second level encoding pass and defined according to system parameters.

Steps 305 and 306 allow tile selection for application of the second level encoding while ensuring there is enough time for an execution of this second level encoding.

If the test is negative, a further tile candidate is searched for at step 308 already described. Otherwise an estimation of the quantization parameters $QP_2$ is performed for the selected tile (step 307) thus ending step 219 before using the quantization value for the second level encoding (step 221 in Figure 5).

The step of estimating the quantization value is for instance implemented by decreasing this value compared to the one used for the previous CAVLC encoding of the preceding pass performed on the tile (either first pass encoding or second pass encoding). For instance one quantization unit decrement is applied to all macro blocks. It can also be considered applying new quantization parameters $QP_2$ for some macro blocks only within the tile, *e.g.* these macroblocks for which quality is low (using for instance a mean to average difference at macroblock level).

It is to be recalled that decreasing the quantization value increases encoding quality.

A possible embodiment of operation of the network packetization module 122 is now described with reference to **Figure 10.**

The network packetization module 122 awaits a video start signal, at step 650, until a start of video frame event (step 651) is received, such as the first tile cycle event (TILE_clk signal 140) generated by video interface module 104.

A start of tile event is generated by the video interface module 104, and referenced as TILE_clk 140 in Figure 1.

A packet transmission event is generated by the network interface module 108, and referenced as NW_clk 141 in Figure 1.

YUV encoded source tile information is provided by the video interface module 104 to the image encoder 120 via the input signals S_TILE 142, as illustrated in Figure 1.

The payload of network packets is provided to the network interface module 108 by the image encoder 120 via the output signals TX_PCK 143, as illustrated in Figure 1.

The payload of the network packets is prepared to be ready for transmission in step 652. This operation is further described on the left-hand side of Figure 10, through steps 660 to 671.

After completion of the network packet payload construction, the network packetization module awaits a next event, step 653, to be either a start of tile event, step 655, or a packet transmission event, step 654:

- after receiving a packet transmission event (an event representative of a completed packet transmission) a new packet payload is prepared, by executing again step 652;
- after receiving a tile start event, at step 656, a start of tile offset is recorded. This offset is being representative of a lapse of time from the previous packet transmission event and the tile start event. The resulting offset information can be sent along packet payload, as protocol information to be stored in the field 159 for the corresponding tile, in order to allow the video receiver synchronizing its decoding operation at packet reception.

The packet payload (step 652 previously referred to) construction starts at step 660, initializing a counter to 0. This counter represents current packet payload size. Therefore the operation of data storage in the packet payload is repeated until the whole packet payload is full, that is when test 661 is positive. This terminates the packet payload construction process then the process returns to the main network packetization algorithm (step 653).

Until the packet payload is full (test 661 is negative), step 666 identifies next compressed tile data to transmit. Test 662 checks whether the value of Tx_data field 160 equals the value of ct_size field 157 in order to check whether all the compressed data of the tile have been transferred to the packet payload.

When test 662 is negative, next compressed tile data to transmit is transferred to the packet payload buffer (step 665) and the Tx_data field 160 is correspondingly incremented. Then the packet payload size is also correspondingly incremented (step 671).

On the other hand, when test 662 is positive, the whole compressed tile has already been processed for transmission and the corresponding compressed tile buffer can be released. Next, the end of slice is tested at step 663. If the end of slice is detected, step 664 described below is executed, otherwise step 668 is executed.

At step 668, transmission of a new compressed tile starts by identifying first compressed tile data to transmit for this compressed tile. Then step 665 is executed to transfer data to the packet payload for transmission and to update the Tx_data field 160 of the new tile.

Test 664 checks the necessity for padding the packet payload by checking cs_size.

At this stage all compressed data of the slice have already been transmitted, but target Average Bit Rate might not be reached yet for the slice:

- if the cs_size value of the field 177 is smaller than the maximum slice size value MAX_W_FEED (previously defined as w_size * ABR_CT_SIZE), step 670 is executed: padding data are transferred to the packet payload buffer, ultimately to reach MAX_W_FEED, and the cs_size value is correspondingly incremented;
- if the cs_size value of field 177 reaches the value MAX_W_FEED, at step 669, the transmission of a new compressed slice starts by identifying first compressed tile data to transmit for the first compressed tile of the new slice. Then step 665 is executed for actual data transmission.

The location of padding data in the overall compressed video stream depends on the actual value of w_size, which might be adjusted by the rate control module (step 505) in such a way that w_size is smaller than the value MAX_W_SIZE. Thus it minimizes the quantity of inserted padding data in the overall compressed video stream.

As it is clear from the description above, padding data insertion is controlled to better spread data bursts and avoids transmission buffer underflow or overflow.

The examples described above are only possible embodiments of the invention, which is not limited thereto.

# APPENDIX

| Video settings | | | | | | |
|---|---|---|---|---|---|---|
| 1 | Frame_size | (a) | Frame size | 1080 | lines | V_PARAM_1 |
| 2 | Refresh_rate | (b) | Video refresh rate | 60 | Hz | V_PARAM_2 |
| 3 | PIXEL_per_line | (c) | Number of pixel per line | 1920 | pix/line | (c)= a*16/9 |
| 4 | Video_bitrate | (d) | Raw video bit rate | 2985.984 | Mbps | (d)= a*c*24*b |
| 5 | LINE_cy_duration | (e) | Line cycle duration | 15.43 | $\mu$s | (e) = 1/(a*b) |

| CODEC settings | | | | | | |
|---|---|---|---|---|---|---|
| 6 | TILE_per_line | (f) | Number of tiles per line (MB size) | 16 | lines | C_PARAM_1 |
| 7 | PBR_CT_SIZE | (g) | maximum size for a compressed tile | 65536 | Bytes | C_PARAM_2 |
| 8 | TILE_cy_duration | (h) | Tile cycle duration | 246.91 | $\mu$s | (h)= f*e |

| Network settings | | | | | | |
|---|---|---|---|---|---|---|
| 9 | ABR_Tgt | (i) | Target average bit rate | 800 | Mbps | N_PARAM_1 |
| 10 | NW_cy_duration | (i) | Period of the network clock (NW_clk), also representing the time between two consecutive packets | 125 | $\mu$s | N_PARAM_2 |
| 11 | compression_rate | (k) | Compression ratio | 3.73248 | | (k)= d/j |
| 12 | NW_pk_payload_size | (l) | Network packet payload size dedicated to compressed data (not including protocol information, error correction redundancy, synchronization information) | 12500 | Bytes | (i)= i*j |
| 13 | ABR_CT_size | (m) | Typical average size for a compressed tile | 24691 | Bytes | (m) = INT(i*h) |

| Latency settings | | | | | | |
|---|---|---|---|---|---|---|
| 14 | ENC_latency_Tgt | (n) | Targeted latency at the encoder side | 2 | ms | L_PARAM_1 |
| 15 | MAX_W_SIZE | (o) | Maximum number of tiles per slice | 8 | Tiles | (o)=INT(i*n/m) |
| 16 | ENC_latency | (p) | Actual latency at encoder side | 1.975 | ms | (p)= o*m/i |
| 17 | MAX_W_FEED | (q) | Maximum number of bytes per slice | 197 528 | bytes | (p)= m * o |

## Claims

**1.** Method for sending compressed data representing at least part of a digital image, **characterised by** the following steps:

- encoding (206, 220) source data representing said part, according to a first level encoding pass enabling first compressed data to be obtained within a determined time period;

- encoding (221) said source data according to at least one second level encoding pass to obtain second compressed data;
- selecting (218) the second compressed data on at least one condition, comprising that the second compressed data is obtained (205) within the determined time period (215), or otherwise selecting the first compressed data (217),
- sending the selected compressed data.

2. Sending method according to claim 1, wherein said determined time period is defined by a signal generated by a transmission module.

3. Sending method according to claim 1 or 2, wherein the step of encoding according to at least one second level encoding pass includes processing intermediate data obtained during the step of encoding according to the first level encoding pass.

4. Sending method according to claim 3, comprising a step of encoding said source data according to a further encoding pass, including processing said intermediate data.

5. Sending method according to any of claims 1 to 4, further comprising determining (207) a parameter of said first level encoding pass to enable said first compressed data to have a size predictably lower than a first predetermined size.

6. Sending method according to any of claims 1 to 5, wherein the second compressed data are selected on the further condition that said second compressed data comprise a lower amount of data than the first compressed data.

7. Sending method according to any of claims 1 to 5, wherein the second compressed data are encoded using quantization parameters aiming at a higher quality of representation of said part of the digital image than quantization parameters used for encoding the first compressed data.

8. Sending method according to any of claims 1 to 7, wherein the second compressed data are selected on the further condition that a size of data associated with a group of image parts and including said second compressed data does not exceed a second predetermined size (216).

9. Sending method according to any of claims 1 to 8, wherein a second level encoding pass is performed only if the time needed for said performance is predicted (305) not to exceed said determined time period (306).

10. Sending method according to any of claims 1 to 9, comprising a further step of selecting (301, 304), from a plurality of image parts, an image part to which the step of encoding according to at least one second level encoding pass is to be applied.

11. Sending method according to claim 10, wherein the step of selecting the image part includes selecting a part of which corresponding first compressed data forms a low quality representation of said part (304).

12. Sending method according to any of claims 1 to 11, wherein said first compressed data is designated for transmission at the end of the step of encoding according to the first level encoding pass and wherein the step of selecting the second compressed data comprises replacing (700) the designation of the first compressed data with the designation of the second compressed data.

13. Device for sending compressed data representing at least part of a digital image, **characterised by**:

   - first encoding means for encoding source data representing said part, according to a first level encoding pass enabling first compressed data to be obtained within a determined time period;
   - second encoding means for encoding said source data according to at least one second level encoding pass to obtain second compressed data;
   - means for selecting the second compressed data on at least one condition, comprising that the second compressed data is obtained within the determined time period, or otherwise the first compressed data,
   - means for sending the selected compressed data.

14. Computer program comprising instructions for carrying out each step of the method according to any claims 1 to 12 when the program is loaded and executed by a programmable apparatus.

**15.** Information storage means readable by a computer or a microprocessor storing computer program instructions for carrying out each step of the method according to any claims 1 to 12 when the program is loaded and executed by a programmable apparatus.

**Figure 1**

**Figure 2**

C_tile_buf(0)

C_tile_buf(1)

...

C_tile_buf(n)

...

C_tile_buf(NbOfCBuf)

150

| QF | ct_size | CT_payload | protocol |
| Tx_data | | IT_payload | |

157 158 159

155

160 156

**Figure 3**

C_slice_buf(0)

C_slice_buf(1)

...

C_slice_buf(n)

...

C_slice_buf(NbOfWBuf)

170

| QF | w_size | cs_size | CT(0)_id | CT(1)_id | ... | CT(n-1)_id |

175

176 177 178 179 180

**Figure 4**

**Figure 5**

200 — Blank slice buffer (latency)

201 — Start slice buffer (w = 0)

202 — Wait for next event

203 — TILE_clk

205 — L2_ready

204 — L1_ready

206 — IT encode

207 — Quantization value determination

210 — Including compressed tile either in current slice or in new slice

215 — Frozen?
YES
NO

216 — Slice capacity exceeded?
YES
NO

220 — L1_encode

217 — discard

218 — SWAP (Fig.6)

221 — L2_encode

219 — Select L2 Tile candidate

222 — L2 busy?
YES

Start step 218

Replace corresponding C_TILE buffer with new C2_TILE buffer

700

Last tile for the slice?

YES

701

NO

Estimate new cs_size by shortening slice

702

Close to ABR?

NO

703

YES

Re-organize next slice(s)

704

End of step 218

# FIGURE 6

NO      End of slice?      YES

501

Refine nb of tiles ?
(Fig. 8)      NO

504

Store tile in current slice
buffer

502

YES

Freeze buffer size

505

Allocate new slice buffer;
w=0

503

Start new w_buf; w =0

506

Store tile in slice buffer
and increment w

507

# Figure 7

From 501

Two consecutive MAX complex tiles? — YES

720

NO

Two consecutive MID complex tiles?

NO

721

YES

Average complexity is well balanced? — NO

YES

722

Negative end of test 504

Positive end of test 504

**FIGURE 8**

Figure 9

start step 652

660 — i = 0

661

YES

i = Pk_size

End of step 652

NO

666 — Go to next C_TILE data

662

YES    End of    NO
       C_TILE

663

Last tile?    NO

664    YES                668

YES    Padding?    NO    Freeze new C_TILE

669    Freeze new C_SLICE

671 — i++

Padding
cs_size++    670

665    Tx_data++

650 — Wait for
       video_start

651 — Tile_cycle start

652 — Build network packet payload

653 — Wait for cycle event    655

654 — NW_cyc_start    Tile_cycle start

656 — Build (P) sync_pk

**Figure 10**

Start step 704

705 — Update corresponding Slice parameters with Tile reference

706 — Prepare new Slice buffer

707 — Update Slice buffer parameters with next Tile reference

708

YES — End of Slice? — NO

NO — Last Tile buffer ? — YES

709

YES — Last Tile buffer ? — NO

710

End of step 704

# FIGURE 11

# EP 2 285 111 A1

**EUROPEAN SEARCH REPORT**

Application Number

EP 09 30 5744

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2006/012384 A2 (QUALCOMM INC [US]; RAVEENDRAN VIJAYALAKSHMI R [US]; SHI FANG [US]; WAL) 2 February 2006 (2006-02-02)<br>* paragraph [0021] - paragraph [0022] *<br>* paragraph [0031] - paragraph [0034] *<br>* page 29 *<br>* figures 1-4 *<br>----- | 1-15 | INV.<br>H04N7/26 |
| Y | JP 2004 015726 A (CANON KK) 15 January 2004 (2004-01-15)<br>* abstract *<br>----- | 1-15 | |
| A | WO 2008/051517 A2 (THOMSON LICENSING [FR]; DANE GOKCE [US]; LU XIAOAN [US]; GOMILA CRISTI) 2 May 2008 (2008-05-02)<br>* page 1, line 15 - page 3, line 14 *<br>----- | 1-15 | |
| | | | TECHNICAL FIELDS SEARCHED (IPC)<br><br>H04N |

The present search report has been drawn up for all claims

| Place of search | Date of completion of the search | Examiner |
|---|---|---|
| Munich | 26 November 2009 | Regidor Arenales, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 30 5744

This annex lists the patent family members relating to the patent documents cited in the above-mentioned European search report.
The members are as contained in the European Patent Office EDP file on
The European Patent Office is in no way liable for these particulars which are merely given for the purpose of information.

26-11-2009

| Patent document cited in search report | | Publication date | Patent family member(s) | | Publication date |
|---|---|---|---|---|---|
| WO 2006012384 | A2 | 02-02-2006 | AU | 2005267171 A1 | 02-02-2006 |
| | | | BR | PI0513527 A | 06-05-2008 |
| | | | CA | 2574297 A1 | 02-02-2006 |
| | | | CN | 101189882 A | 28-05-2008 |
| | | | EP | 1772017 A2 | 11-04-2007 |
| | | | EP | 2096873 A2 | 02-09-2009 |
| | | | JP | 2008507915 T | 13-03-2008 |
| | | | KR | 20070044455 A | 27-04-2007 |
| | | | KR | 20080104071 A | 28-11-2008 |
| JP 2004015726 | A | 15-01-2004 | JP | 3902983 B2 | 11-04-2007 |
| WO 2008051517 | A2 | 02-05-2008 | CN | 101529912 A | 09-09-2009 |
| | | | EP | 2087739 A2 | 12-08-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004076229 A